# EUROPEAN PATENT APPLICATION

(11) **EP 4 253 830 A1**
(43) Date of publication of application: **04.10.2023**
(21) Application number: 22165632.5
(22) Date of filing: 30.03.2022
(51) Int. Cl.: F21S 41/24, F21S 41/176, F21S 43/16, F21S 43/50, F21S 41/50

(54) **AUTOMOTIVE LUMINOUS DEVICE**

(71) Applicant: Valeo Vision, 93012 Bobigny Cedex (FR)
(72) Inventor: SANTAELLA HERNANDEZ, Juan Jose, 23600 Martos (ES); ILLAN CABEZA, Antonio Domingo, 23600 Martos (ES)
(74) Representative: Valeo Visibility

(57) **Abstract**

The present invention provides an automotive luminous device (1, 11) comprising a first lighting element (12) configured to contribute to a lighting or signalling function, a quantum dot stimulator element (2, 17) and a quantum dot arrangement (7, 19) arranged to be excited by the quantum dot stimulator element (2, 17), to produce a customized colour which is not acceptable by any of the lighting or signalling functions.

## Description

### TECHNICAL FIELD

This invention belongs to the field of electronic assemblies comprised within the automotive luminous devices, intended to provide luminous functions to the vehicles.

### STATE OF THE ART

Automotive lighting market can be considered one of the most competitive ones and new lighting functionalities are constantly required.

Car manufacturers are looking for new technical ways of showing their brand exclusivity by any visual means in their vehicles. There are some models which have a unique paint colour, or unique visual effects in the headlamps.

Concerning colours, the visual appearance of a vehicle is mainly based on the body colour. However, the light emitted by the different lighting devices also contributes to create a customized appearance and its very valuable for car manufacturers.

Current light developments are focused on normalized colours, which are intended to contribute to a lighting or signalling function. Hence, the colour of light sources (either halogens, laser or LEDs) or the plastic cover or outer lenses are intended to fulfil with these patterns (basically white, amber or red). Combining a normalized colour with a non-normalized colour is therefore a difficult task provided the state of the art developments.

### DESCRIPTION OF THE INVENTION

The invention provides an alternative solution for providing customized colours within an automotive luminous device by an automotive luminous device comprising
a first lighting element configured to contribute to a lighting or signalling function
a quantum dot stimulator element
a quantum dot arrangement arranged to be excited by the quantum dot stimulator element, to produce a customized colour which is not acceptable by any of the lighting or signalling functions.

A quantum dot is an electronic structure obtained out of a semiconductor nanocrystal, with a size such that their electrons and holes are confined in all three spatial dimensions. Depending on the particular sizes of the quantum dots, they emit light in a particular wavelength (bandgap) when they are stimulated. As a consequence, "red" quantum dots would be quantum dots which emit light in the red bandgap when excited, "green" quantum dots would be quantum dots which emit light in the green bandgap when excited, etc. However, when they are not excited, they may not be visible. This is because quantum dots are deposited in a nanometric layer using a thin film deposition technology. By controlling the amount and density of the quantum dots, this layer could be not visible when not excited either by an electric or by a luminescent stimulator.

The stimulation of quantum dots may be achieved either luminescently or electrically. Hence, the quantum dot stimulation element may be a light source, configured to provide a luminescent stimulation, or an electric power source, configured to provide an electrical stimulation.

Quantum dot layers are only in charge of providing the suitable colour for the lighting functionality, but do not provide the luminous flux necessary to fulfil the regulations. The light power is provided by the light sources, not by the quantum dot layer.

With this lighting device, it is possible to provide light of a customized non-regulated colour within an automotive lighting device which is further configured to provide a regulated lighting or signalling function. Due to the versatility of the quantum dot structure, almost any colour may be projected by the second light element.

In some particular embodiments, each of the first lighting element and the second lighting element comprises a light source and an optical element.

In these cases, the first and the second lighting elements are separated elements, each one emitting its own light and projecting it by its corresponding optical element.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements which are useful for transforming the light beams emitted by the light source into an acceptable light pattern for the functionality chosen for the lighting device. All of these optical elements define a focus, which is the point where the light emitted by the light source is most effectively transmitted by the optical element.

In some particular embodiments, the first lighting element comprises a first optical element configured to project light emitted by a main light source and the second lighting element comprises a second optical element configured to project light emitted by the same main light source.

In this case, the same light source may be used to provide two different outputs: light for the normalized lighting or signalling functionality and for the non-normalized customized light.

In some particular embodiments, the quantum dot arrangement is arranged between one of the light sources and the optical element which is configured to project the light emitted by that light source.

In these cases, the light source may have some quantum dot arrangement deposited in an intermediate zone between the emission of the light and the reception of the optical element.

In some particular embodiments, the quantum dot arrangement is deposited on at least a portion of one of the optical elements.

In this case, which is particularly advantageous for the case of light guides, the quantum dot arrangement is directly deposited on the optical element. Since the light guide has a smooth outer portion, the quantum dot arrangement may selectively be deposited on specific portions, to create customize lighting effects.

In some particular embodiments, the quantum dots are deposited on a substrate layer.

This substrate layer may be deposited in the interior or exterior of the optical element, to modify the colour that each portion of this lightguide projects to the exterior.

In some particular embodiments, the optical element is a lightguide.

A lightguide is especially optimized to contribute to many of the lighting functions of an automotive vehicle.

In some particular embodiments, the quantum dot arrangement comprises one quantum dot layer.

When the customized colour is not very complex, a single layer may be enough. In this layer, quantum dots of a single colour or different colours may be arranged, depending on the design and the colour tolerances of the car manufacturer.

In some particular embodiment, the quantum dot arrangement comprises more than one quantum dot layer.

When the customized colour to be obtained is a complex one, more than one quantum dot layer may be assessed separately, to achieve the particular tone required by the car manufacturer.

In some particular embodiments, the light sources are solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In a second inventive aspect, the invention provides a method for providing an automotive luminous device according to the first inventive aspect, the method comprising the steps of
providing a customized colour which does not belong to the colour of any lighting or signalling function
providing a quantum dot stimulator element
selecting the density, colour and scattering of a plurality of quantum dots to create a quantum dot arrangement which, when excited by the quantum dot stimulator element, produces the customized colour
arranging the quantum dot arrangement and the quantum dot stimulator element in an automotive luminous device.

With this method, each car manufacturer has a technical way of implementing their own customized designs, aimed to differentiate and increase their brand value.

In some particular embodiments, the quantum dot stimulator element is a light source, and between the step of selecting the features of the quantum dots and arranging the light source with the quantum dots, the method comprises the step of measuring the emission spectrum and density of the quantum dots of the quantum dot arrangement to calculate the contribution of each quantum dot to the whole quantum dot arrangement.

Since a specific colour is to be achieved, more measurements than in the case of regulatory colours are useful.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a first embodiment of an automotive luminous device according to the invention.
Figure 2 shows a second embodiment of an automotive luminous device according to the invention.

In these figures, the following reference numbers have been used:
- 1: First automotive lighting device
- 2: LED
- 3: Lightguide
- 4: Lateral surface of the lightguide
- 5: Edge surface of the lightguide
- 6: First quantum dot layer
- 7: Second quantum dot layer
- 11: Second automotive lighting device
- 12: First lighting structure
- 13: Second lighting structure
- 14: LED of the first lighting structure
- 15: Lightguide of the first lighting structure
- 16: Quantum dot layer of the first lighting structure
- 17: LED of the second lighting structure
- 18: Lightguide of the second lighting structure
- 19: Quantum dot layer of the second lighting structure

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

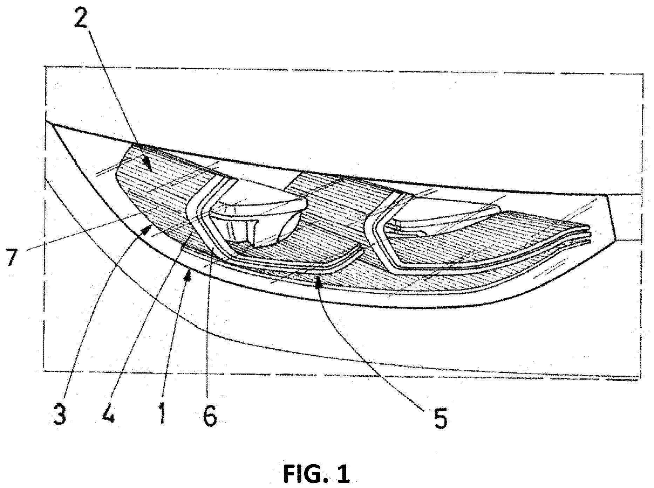

Figure 1 shows a first embodiment of an automotive luminous device 1 according to the invention.

This luminous device 1 comprises a light source 2, a lightguide 3 and a first quantum dot layer 6.

The light source 2 is a LED which is configured to emit light in a blue wavelength. This emission is advantageous in terms of light power and, since it has only one wavelength peak, it is advantageous for colour tuning.

The lightguide comprises a lateral portion 4 and an edge portion 5. The edge portion 5 is arranged at the front of the lighting device, prepared to project light in the forwarding direction of the vehicle.

In the edge portion 5 of the lightguide, which is seen perpendicularly from the front, the first quantum dot layer 6 is deposited, to change the wavelength of the blue light received by this edge portion and transform it into a white light which is acceptable by current regulations for a daytime running lamp function.

This first quantum dot layer 6 may comprise, in some embodiments, quantum dots deposited on a substrate layer, and then the substrate layer with the quantum dots is deposited on the edge portion of the lightguide.

Further, the lateral portion 4 of the lightguide comprises a further quantum dot layer 7 deposited on it.

To design this quantum dot layer, the car manufacturer chooses a customized colour which does not belong to the colour of any lighting or signalling function.

Once this colour has been chosen, and taking into account that the common light source emits in a blue wavelength, the density, colour and scattering of the plurality of quantum dots is chosen to create a quantum dot layer which, when excited by the blue light source, produces the customized colour.

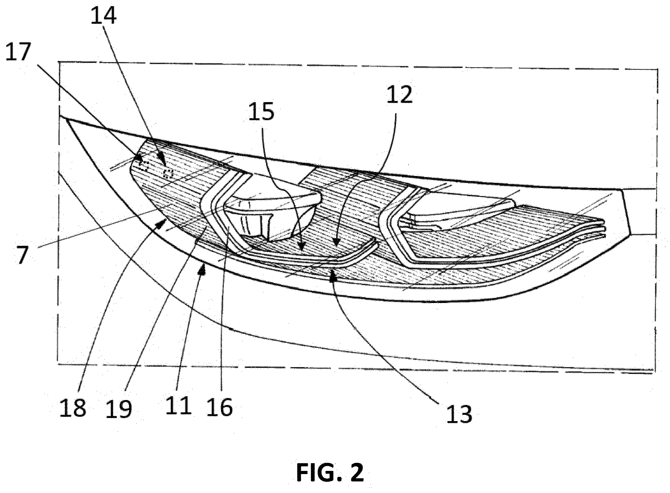

Figure 2 shows a second embodiment of an automotive luminous device 11 according to the invention.

This luminous device 11 comprises two different lighting structures 12, 13.

The first lighting structure 12 comprises a light source 14, a lightguide 15 and a quantum dot layer 16. This first lighting structure is aimed to provide a daytime running lamp functionality. To do so, the light source 14 is a blue LED and emits light towards the lightguide 15, which projects the light received from the LED. The quantum dot layer 16, which is arranged on the edge of the lightguide 15, transforms the received blue light into an acceptable white light, suitable to be used for the daytime running lamp functionality.

The second lighting structure 13 comprises its own light source 17, its own lightguide 18 and its own quantum dot layer arrangement 19. This second lighting structure 13 is aimed to provide a welcome light functionality. This signalling functionality does not require any particular regulated colour, so the car manufacturer has designed a customized colour which is related to their brand image.

Once this colour has been chosen, and taking into account that the common light source emits in a blue wavelength, the density, colour and scattering of the plurality of quantum dots is chosen to create a quantum dot layer which, when excited by the blue light source, produces the customized colour.

After the quantum dot layer has been designed, the corresponding quantum dots are synthetised. Since this application usually corresponds to premium ranges, before installing the quantum dots in the lighting device, their emission spectrum and density are carefully measured, to calculate the contribution of each quantum dot to the whole quantum dot arrangement.

In this case, all the different quantum dots are arranged in a single layer, but in different examples, different layers are overlapped to create the quantum dot arrangement.

Once the final quantum dot arrangement has been finally produced, it is installed in the lightguide 18 of the second lighting structure 13, so that this second lighting structure 13 produces the designed customized colour.

As a consequence, the two functionalities are separated, and the welcome light with a customized exclusive colour is achieved. In fact, one advantage of the use of quantum dots is that a wider range of colours may be obtained, compared with current technologies.

In different embodiments, not illustrated, instead of the second lighting structure 13, an electrical supply may be provided to excite the quantum dot layer of the second structure.

## Claims

1. Automotive luminous device (1, 11) comprising
a first lighting element (12) configured to contribute to a lighting or signalling function
a quantum dot stimulator element (2, 17)
a quantum dot arrangement (7, 19) arranged to be excited by the quantum dot stimulator element (2, 17), to produce a customized colour which is not acceptable by any of the lighting or signalling functions.

2. Automotive luminous device according to claim 1, wherein the quantum dot stimulator element (2, 17) comprises an electrical source of energy arranged to provide electrical supply to the quantum dot arrangement.

3. Automotive luminous device according to claim 1, wherein each of the first lighting element (12) and the quantum dot stimulator element (2, 17) comprises a light source (2, 14, 17) and an optical element (3, 18).

4. Automotive luminous device according to claim 1, wherein the first lighting element (12) comprises a first optical element (5) configured to project light emitted by a main light source and the quantum dot stimulator element comprises a second optical element (4) configured to project light emitted by the same main light source (2).

5. Automotive luminous device according to any of claims 3 or 4, wherein the quantum dot arrangement (7, 19) is arranged between one of the light sources and the optical element which is configured to project the light emitted by that light source.

6. Automotive luminous device according to any of claims 3 to 5, wherein the quantum dot arrangement (7, 19) is deposited on at least a portion of one of the optical elements (4, 18).

7. Automotive luminous device according to any of the preceding claims, wherein the quantum dots are deposited on a substrate layer.

8. Automotive luminous device according to any of the preceding claims, wherein at least one of the optical elements is a lightguide.

9. Automotive luminous device according to any of the preceding claims, wherein the light sources are solid-state light sources.

10. Automotive luminous device according to any of the preceding claims, wherein the quantum dot arrangement comprises one quantum dot layer.

11. Automotive luminous device according to any of claims 1 to 8, wherein the quantum dot arrangement comprises more than one quantum dot layer.

12. Method for providing an automotive luminous device according to any of the preceding claims, the method comprising the steps of
providing a customized colour which does not belong to the colour of any lighting or signalling function
providing a quantum dot stimulator element (2, 17)
selecting the density, colour and scattering of a plurality of quantum dots to create a quantum dot arrangement (7, 19) which, when excited by the quantum dot stimulator element, produces the customized colour
arranging the quantum dot arrangement (7, 19) and the quantum dot stimulator element (2, 17) in an automotive luminous device.

13. Method according to claim 11, wherein the quantum dot stimulator element comprises a light source, and between the step of selecting the features of the quantum dots and arranging the light source with the quantum dots, the method comprises the step of measuring the emission spectrum and density of the quantum dots of the quantum dot arrangement to calculate the contribution of each quantum dot to the whole quantum dot arrangement.
